# EUROPEAN PATENT APPLICATION

(11) **EP 3 130 310 A1**
(43) Date of publication of application: **15.02.2017**
(21) Application number: 15002383.6
(22) Date of filing: 11.08.2015
(51) Int. Cl.: A61C 9/00

(54) **SCANNING AID AND METHOD OF SCANNING AN OBJECT**

(71) Applicant: Rheinisch-Westfälische Technische Hochschule Aachen, 52062 Aachen (DE)
(72) Inventor: Reich, Sven, 52066 Aachen (DE); Lang, Malte, 52064 Aachen (DE); Hartkamp, Oliver, 36251 Bad Hersfeld (DE); Brücklmeier, Anna, 52064 Aachen (DE)
(74) Representative: Cohausz Hannig Borkowski Wißgott

(57) **Abstract**

The invention relates to a scanning aid for facilitating 3D scanning of an object (5), particularly an object having too little structure to be solely scanned comprising a substrate (1) having a supporting element to which the object (5) can be attached in a way that the object (5) is held above the surface of the substrate and the surface of the substrate (1) having irregular and / or asymmetric structures (2, 3, 4). The invention furthermore relates to a method of scanning an object, particularly scanning of a dental abutment (5) using a 3D-scanner, particularly intraoral scanning device comprising the steps of attaching the object (5) to a supporting element, particular attaching the dental abutment (5) to a dental laboratory implant, the supporting element being integrated in a scanning aid having irregular structures (2, 3, 4) on the surface, and scanning the object (5), preferably from all sides, and acquiring scan data from the object (5) and the irregular structures (2, 3, 4) simultaneously.

## Description

The invention relates to a scanning aid for facilitating 3D scanning of an object, particularly an object having too little structure to be solely scanned. The invention furthermore relates to a method of scanning an object.

Wellknown techniques are established for scanning objects and preparing virtual 3D data of an object based on scan data, particularly 2D-scan data of at least one scanned picture, for example using optical methods like triangulation or confocal microscopy. All these techniques are typically used to generate data for a manufacturing process in which a copy of a scanned object or a mating part to the object is manufactured. The methods are based on optical scanning, typically using a scanning device having imaging optics, like a camera.

A typical kind of scanning devices may comprise a projector for projecting a pattern, particularly a grid pattern onto the object and at least one camera for capturing light reflected from the object to be scanned. Using a data processing unit acquired scan data is typically transformed into 3D-data, preferably by triangulation.

Another kind of scanning device uses at least one camera for receiving reflections of probe light with varying focus plane positions on the object. In-focus positions of the sensor elements of a camera may be transformed into 3D-coordinates using a data processing unit.

In the field of dentistry short scanning times and small devices are necessary for scanning teeth or intraoral boundaries, particularly for the acquisition of prepared teeth, in particular for crown restorations.

For this purpose an intraoral scanning device, particularly having an imaging optic like a camera preferably in combination with a probe light or pattern projector, is used to acquire pictures of the area of interest and to generate data, particularly STL-data, for facilitating the design and / or preparation of the restoration. Such data, particularly STL-data may be directly used in a CAD/CAM-process, preferably by milling a blank or a green body or in a generating process.

Particularly for fixed implant restorations the area of interest typically comprises an abutment that is fixed to the intraoral implant and that serves to attach the restoration on it. Pictures of the abutments and the surrounding structure, in particular of teeth and/or gingiva, need to be captured in order to prepare a fitting restoration.

It is a problem in this context that partial areas, particularly the finish line of the abutment that need to be scanned is sited below the gingiva and accordingly cannot be seen by the optical scanning device during an intraoral scan of the abutment. The clear virtual display of the finish line is essential for the correct design of an accurately fitting restoration.

The inventors themselves already predicted to acquire at least one intraoral scan of the abutment in place without visibility of the entire preparation boundary and to acquire at least one extraoral scan of the sole abutment revealing all necessary details of the preparation boundary.

The intraoral scan information and extraoral scan information may be superimposed in a digital way by means of data superimposition, particularly of STL-data, thus forming a combined information that serves to prepare the restoration in consideration of the entire preparation boundary.

Such information may be made visible on a display as a 3D-representation or 2D-representation of 3D-data in order to plan the restoration in consideration of the shown data. Planning and preparing a dental restoration on the basis of 3D-data as such is well known and need not to be explained furthermore.

Even though the principles of such a process have been predicted it was found that conducting an extraoral scan of a sole intraoral abutment is problematic in view of the fact that such an abutment itself does not show significant structures to be recorded, particulary if an intraoral optical scanning device is used that is determined by the manufacturer to perform intraoral scans only.

Such an intraoral scanning device typically needs to scan irregular structures as a part of the scanned pictures in order to perform a reliable recognition of teeth, gingiva and abutment boundaries, particulary by means of the underlying software processing the acquired visual data. Since such an irregular structure, that is provided by the teeth in an intraoral scan is missing in an extraoral scan this kind of scanning device typically fails when used for extraoral scans.

Even though the inventors have identified these problems in the field of dentistry the invention as disclosed hereinafter is applicable for any kind of object to be scanned that cannot be scanned standing alone due to lack of enough structures. Of course the invention is preferably applicable in the field of dentistry and particularly for scanning abutments, preferably after their individual adaption to the patient.

Accordingly it is an object of the invention to provide a method of scanning an object, particularly scanning of a dental abutment using a 3D-scanner, particularly intraoral scanning device. Furthermore it is an object of the invention to provide a scanning aid for facilitating 3D-scanning of an object, particularly an object having too little structure to be solely scanned. Preferably it is a further object of the invention to make use of an intraoral scanning device that is determined to perform intraoral scans only for the purpose of performing extraoral scans of abutments.

According to the invention this object is solved by means of a scanning aid comprising a substrate having a supporting element to which the object can be attached in a way that the object is held above the surface of the substrate, the surface of the substrate having irregular and / or asymmetric structures.

The object furthermore is solved in a method of scanning an object, particularly scanning of a dental abutment using a 3D-scanner, particularly intraoral scanner comprising the steps of attaching the object to a supporting element, particular attaching the dental implant abutment to a dental laboratory implant, the supporting element being integrated in a scanning aid having irregular structures on the surface and scanning the object, preferably from all sides, and acquiring scan data from the object and the irregular structures simultaneously.

It is an essential feature of the invention to scan an object of interest not in a stand-alone fashion but in combination with a scanning aid that supports the recognition capabilities of the scanning device in use. By doing scans this way even almost structureless objects, that cannot be scanned alone, may be scanned using a 3D optical scanning device. The object to be scanned is attached to the supporting element of the scanning aid and is held above the surface that provides the needed irregular structure to improve recognition during a scan.

When performing scans of the object held in place, particularly in a top view and or knee view configuration, the acquired pictures or scan data also comprise parts of the irregular structures integrated into the surface besides the object itself, particularly the structure forming information in the background of the object. Preferably and in accordance with the invention the structures in the surface have the only purpose to provide information in the background of the acquired pictures.

The irregular structures in the picture(s) thus support the recognition software of the intraoral scanning device in order to recognize the object boundaries and to generate digital data (preferably STL-data) of it.

Recognition capability and scanning an object from all sides is furthermore improved by using a scanning aid of the invention having irregular structures on the surface of the substrate that completely surround the supporting element.

In a preferred application the supporting element is formed of an element having the supporting characteristics and/or connection geometry of an intraoral implant, particularly being a so called laboratory implant, the element being inserted into the substrate for supporting a dental implant abutment, particularly the object is formed of a dental implant abutment to be scanned.

Consequently a scanning aid of the invention is suitable to perform extraoral scans of abutments as previously mentioned. The scan information / scan data may be used to be superimposed with intraoral scan data, particularly the intraoral scan and extraoral scan being performed with the same 3D-intraoral scanning device.

Later superimposition of scan data is facilitated if the abutment to be inserted into the support of the scanning aid is marked with a recognizable feature (recognizable by the scanner), particularly a scratch, cut, groove or the like. Superimposing this feature in the visualization of the two kinds of scans helps to superimpose the entire data.

In a first alternative the structures in the surface may be provided by recesses having varying cross-section and / or varying depth and / or varying distance to each other.

In a second alternative the structures in the surface may be provided by protrusions having varying cross-section and / or varying height and / or varying distance to each other.

Of course these alternative may also be combined so that the structures may be provided by recesses and / or protrusions simultaneously.

In a preferred embodiment the recesses and / or protrusions may be positioned in a meander-like sequence, particularly having grooves or walls between the recesses and/or protrusions.

In another alternative that may be also combined with the aforementioned ones the structures in the surface may be provided by scan bodies being determined to be scan-able by a specific scanner to be used for scanning.

It is known in the state of the art that specific optical scanning devices are adapted to recognize specific scan bodies, particular pyramidal protrusions. Accordingly such specific scan bodies may be attached to the surface of the scanning aid in an irregular fashion. Such scan bodies may be positioned in order to surround the supporting element.

An embodiment of the invention is explained on the basis of the attached drawing.

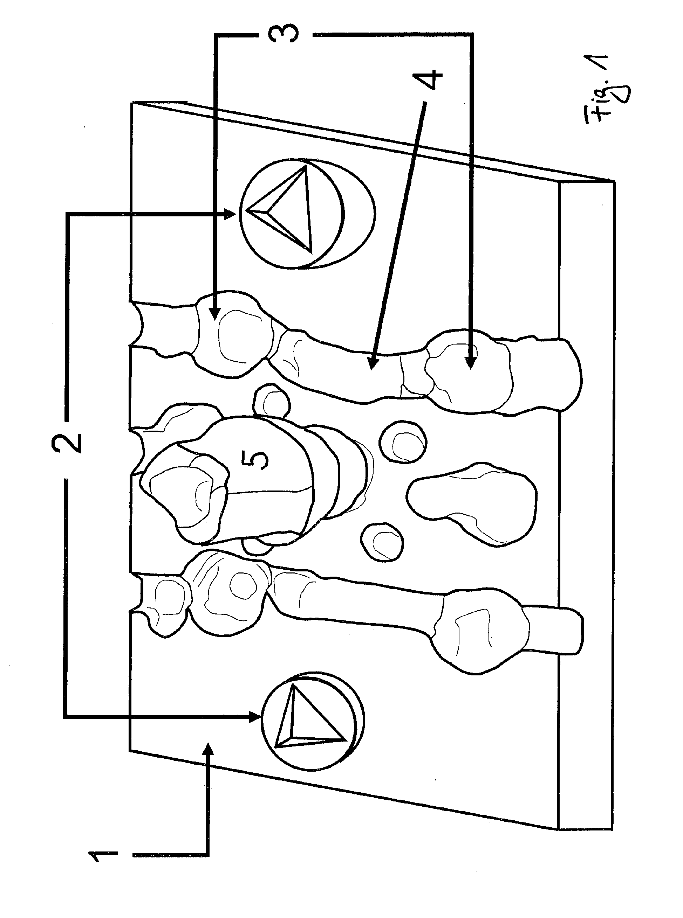

Figure 1 shows a top view of a scanning aid according to the invention. This scanning aid comprises a substrate 1 having an upper surface. Essentially in the middle of the surface a supporting element is integrated into the substrate to support a dental implant abutment. This abutment is used later to attach a dental restoration on it.

Figure 1 furthermore shows that in this top view some irregular structures, preferably of any kind, are surrounding the support and the fixed abutment 5. The structures comprise pyramidal scan bodies 2 and recesses 3. The irregularity is provided here by different distances between the same kind of structures 2/3. Furthermore a structure is provided by connecting grooves 4 between the recesses 3 or grooves 4 extending to both sides and emerging from a recess 3.

As it is apparent from the figure 1 a scanner, particularly an intraoral scanning device used in top view or knee shot (angulated capture) configuration will see the abutment to be scanned and simultaneously the mentioned structure in the background of the abutment. Accordingly the structures form a part of the captured pictures and support the recognition of the abutment boundaries.

The abutment is held preferably in a height above the substrate surface so that the later preparation boundary is totally visible to the intraoral scanning device preferably from all sides. Accordingly the same boundary may be invisible in an intraoral scan since the missing information in the intraoral scan now can be completed by the respective data of the extraoral scan performed with the scanning aid.

Completing the boundary data is performed by superimposing the digital scan data (preferably STL-Data) on a computer display.

The restoration, particularly a crown now can be designed to be attached to the abutment in consideration of both kinds of scans and accordingly in consideration of the entire preparation boundary.

## Claims

1. Scanning aid for facilitating 3D scanning of an object (5), particularly an object having too little structure to be solely scanned comprising:
a. a substrate (1) having a supporting element to which the object (5) can be attached in a way that the object (5) is held above the surface of the substrate
b. the surface of the substrate (1) having irregular and / or asymmetric structures (2, 3, 4).

2. Scanning aid according to claim 1, **characterized in that** the structures (2, 3, 4) on the surface of the substrate (1) completely surround the supporting element.

3. Scanning aid according to anyone of the preceding claims, particularly for facilitating 3D-scanning with an intraoral scanning device, preferably a camera, **characterized in that** the supporting element is formed of an element having the supporting characteristics and/or connection geometry of an intraoral implant, particularly being a laboratory implant, the element being inserted into the substrate (1) for supporting a dental abutment (5), particularly the object (5) is formed of a dental abutment to be scanned.

4. Scanning aid according to anyone of the preceding claims, **characterized in that** the structures (3) in the surface are provided by recesses (3) having varying cross-section and / or varying depth and / or varying distance to each other.

5. Scanning aid according to anyone of the preceding claims, **characterized in that** the structures in the surface are provided by protrusions having varying cross-section and / or varying height and / or varying distance to each other.

6. Scanning aid according to anyone of the preceding claims, **characterized in that** the structures (3) are provided by recesses (3) and / or protrusions being positioned in a meander-like sequence, particularly having grooves or walls between the recesses (3) or protrusions.

7. Scanning aid according to anyone of the preceding claims, **characterized in that** the structures (2) in the surface are provided by scan bodies (2) being determined to be scan-able by a specific scanner to be used for scanning.

8. Scanning aid according to claim 7, **characterized in that** the scan bodies (2) comprise pyramidal protrusions.

9. Method of scanning an object, particularly scanning of a dental abutment (5) using a 3D-scanner, particularly intraoral scanning device comprising the steps of
a. attaching the object (5) to a supporting element, particular attaching the dental abutment (5) to a dental laboratory implant, the supporting element being integrated in a scanning aid having irregular structures (2, 3, 4) on the surface,
b. scanning the object (5), preferably from all sides, and acquiring scan data from the object (5) and the irregular structures (2, 3, 4) simultaneously.
